# EUROPEAN PATENT APPLICATION

(11) **EP 2 885 976 A1**
(43) Date of publication of application: **24.06.2015**
(21) Application number: 13199079.8
(22) Date of filing: 20.12.2013
(51) Int. Cl.: A22C 25/14

(54) **An apparatus and a method for gutting fish**

(71) Applicant: Marel Iceland EHF, 210 Gardabaer (IS)
(72) Inventor: Hallvardsson, Kristjan, IS-110 Reykjavik (IS); Gudlaugsson, Haraldur, 109 Reykjavik (IS); Van Hoof, Bartholomeus Gerardus Henricus Maria, 5761 AC Bakel (NL)
(74) Representative: Patentgruppen

(57) **Abstract**

This invention relates to an apparatus for gutting a fish. A fish gullet cutting device is provided that includes a cutting means (102), and a guiding portion (103) positioned anterior to the cutting means, wherein the fish gullet cutting device is adapted to enter the fish via the mouth such that the guiding portion moves into the gullet of the fish and guides the cutting means towards the gullet of the fish, where subsequently the cutting means cuts the gullet of the fish

## Description

### FIELD OF THE INVENTION

The present invention relates to an apparatus and a method for gutting fish.

### BACKGROUND OF THE INVENTION

EP1003378 discloses an apparatus for gutting fish comprising a conveyor having a receptacle for accommodating the fish to be processed. During processing, the fish is positioned in the receptacle and conveyed along a transport path while positioned on a backside with the tail pointing forward.

A processing unit is arranged above the transport path and configured to be controlled relative to the transport path and parallel to a plane of symmetry of the fish. The processing unit is arranged to open the abdominal cavity along an abdominal seam and to remove the guts by suction. The processing unit comprises a cutter device, a puncturing tool and a separator.

The cutter device is configured to open the abdomen of the fish and includes a pair of circular knives spaced apart from one another, each circular knife having an edge.

The puncturing tool is configured to be positionable in a retracted position and a functional position. The puncturing tool is provided with a guide tip arranged between the circular knives and that protrudes over the edges of the circular knives within an effective region in the functional position. The puncturing tool is directed in a direction opposite the transport direction of the fish.

The separator is configured to separate the rectum within the region of the anus and is arranged directly behind the cutter device. The separator has a separating tool configured to be briefly displaceable into the abdominal cavity within the region of the anus, where the separating tool extends into the region of the blood stream.

The apparatus further comprises at least one control unit for controlling the processing unit depending on specific fish data acquired by a measuring instrument.

Due to how complex this apparatus is, it is relative expensive and requires high maintenance costs. This complexity is also reflected in limited throughput of the apparatus.

More importantly, the hygiene of the apparatus may be an issue because in order to clean the apparatus the processing must be stopped. Due to the large number of components in the apparatus the cleaning of the apparatus is relative time demanding. Therefore, it is common that the cleaning takes place once a day. This means that fishes that may be contaminated and that undergo the gutting process may infect subsequent fishes that undergo the gutting process.

Also, the interior of the fish is removed by means of sucking it away along with water that is used during the processing. The interior of the fish is often used either to produce oil or to produce dry food. However, that fact that much waste water is mixed with the fish interior means that the water must somehow be removed, e.g. by means of vaporizing the water. This is obviously both costly and time demanding process.

The inventor of the present invention has appreciated that there is thus a need for an improved apparatus for gutting fish, preferred embodiments of which provide more economical gutting apparatus with higher throughput and yield and has in consequence devised the present invention.

### SUMMARY OF THE INVENTION

It is an object of embodiments of the invention to provide an improved apparatus for gutting fish that has higher yield, is simpler and more economical.

It is a further object of embodiments of the invention to provide an apparatus for gutting fish, where the hygiene conditions may be greatly enhanced.

In general, the invention preferably seeks to mitigate, alleviate or eliminate one or more of the above mentioned disadvantages of the prior art singly or in any combination. In particular, it may be seen as an object of embodiments of the present invention to provide an apparatus for gutting fish that solves the above mentioned problems, or other problems.

To better address one or more of these concerns, in a first aspect of the invention a gutting apparatus is provided for gutting a fish, comprising:
- a fish gullet cutting device comprising:
   o a cutting means, and
   o a guiding portion positioned anterior to the cutting means,
wherein the fish gullet cutting device is adapted to enter the fish via the mouth such that the guiding portion moves into the gullet of the fish and guides the cutting means towards the gullet of the fish, where subsequently the cutting means cuts the gullet of the fish.

Accordingly, a simple gutting apparatus is provided that is has a simple construction and fewer components compared to prior art apparatuses.

Moreover, one of the challenges when gutting fish is to cut the gullet of the fish, but the gullet acts the main attachment between the interior, i.e. the organs and/or the guts, and the remaining part of the fish. As soon as the gullet has been cut, the rest of the interior of the fish is more or less loose from the fish. Thus, by entering the fish vie the mouth a "short cut" is provided to approach the gullet of the fish and the gutting process may thus be greatly enhanced.

Also, the distance from the mouth to the gullet is relatively independent of the size of the fish, which may facility controlling of the depth of the fish gullet cutting device. This means that e.g. the depth may be set to a fixed value which simplifies the controlling of the gutting apparatus.

More importantly, by utilizing the guiding portion the cutting means may be guided towards the gullet of the fish without becoming stuck in the fish on the way to the gullet, e.g. in the mouth of the fish. It is also ensured that the cutting means does not damage the fish while penetrating towards the gullet.

Due to the simplicity of the apparatus it may easily be cleaned between each individual fish, where after advancing the fish gullet cutting device out of the fish and before it enters the next fish, it may pass one or more cleaning station. The cleaning station may e.g. comprise one or more nozzles that inject water on the cutting means and the guiding portion.

It should be noted that the above mentioned apparatus may be utilized while the fish is in a horizontal position, or while the fish is hanging with head up and tail down, or while the fish is hanging with tail up and head down, or while the fish is in any inclined position.

In one embodiment, the fish gullet cutting device is connected to an advancing means adapted to advance the fish gullet cutting means into the fish automatically, e.g. a any type of a robotic arm, or this may be based on one dimensional up and down movement that may be synchronized to the position of the fish at all times.

In one embodiment, the apparatus further comprises a support structure for supporting the fish during the gutting. The support structure may e.g. be arranged horizontally during the gutting process, or it may in one embodiment be arranged such that the fish has head up and tail down via the fish carrier.

In one embodiment the support structure comprises a fish carrier adapted to be connected to an overhead transport conveyor system arranged such that the fish has head up and tail down. This fish carrier may be connected to a overhead transport conveyor. As an example, the support structure may e.g. a V or U-shaped like fork that has two outwardly penatrating fingers/plats and the like, that penatrates between the gill cover and the gill of the fish. An advantage of arranging the support structure vertically or incline with the fish head up and the tail down is that the gravity contributes in removing the interior of the fish subsequnet to cutting the gullet.

Also, the space between adjacent fishes is much less than the space between adjacent fishes arranged horizontally. As an example, the space between two adjacent fishes, e.g. salmon that is 80cm long, is 80cm plus the distance between the fishes. This means that the total space between the fishes, if the distance between them is 10cm, is 90cm. However, if the fishes are hanging and assuming the fishes are 10cm thick and the distance between adjacent fishes is 10cm, the total distance between the two fishes is 20cm. This difference will obviously be reflected in a lower linear product speed, which will result in a higher throughput of the system

In one embodiment, the apparatus further comprises means for cutting the belly of the fish open prior to or after cutting the gullet of the fish by the cutting means. The cutting means may e.g. comprise a hook-like cutter, a cutting blade, a rotating cutting blade and the like. The cutting may be fully automatized or be fully manual where an operator performs that cutting process manually.

In one embodiment, the apparatus further comprises a mouth opening means for opening the mouth of the fish prior to advancing the fish gullet cutting means into the fish. Thus, this may facility moving the fish gullet cutting device into the fish mouth, which may in some instances be difficult in case the mouth is at least somewhat closed, but in such cases a manual intervening might be necessary.

The mouth opening means may simultaneously act as a fish carrier for carrying the fish, where the mouth opening means may e.g. be connected to an overhead transport conveyor and where e.g. the plurality of such mouth opening means may be connected to the transported overhead transport conveyor.

In one embodiment, the cutting means comprises a rotary driven mandrel. The rotary driven mandrel may in one embodiment comprise a free end having cut out portions. In another embodiment, the the rotary driven mandrel comprises outwardly protruding cutting means. Accordingly, simple solution is provided to cut the gullet of the fish. In the former case where the free end having cut out portions, these cut out portions may e.g. by incline in relation to an longitudinal axis of the rotary driven mandrel so as to form sharp edges on the "teeth" between the cut out portions. In the latter case, the outwardly protruding cutting means may comprise any means such as a plurality of outwardly protruding portions that may e.g. comprise sharp edges.

In one embodiment, the rotary driven mandrel is controlled by a control unit where the controlling includes turning the rotary driven mandrel temporarily on when the rotary driven mandrel has reached the gullet of the fish. Accordingly, in this embodiment that mandrel is not rotating during the process of penetrating the cutting means towards the gullet of the fish. It is not until it has reached the gullet that the mandrel is turned on, e.g. for a fraction of a second or around a second or so, and is subsequently turned off after the gullet has been cut. It is thus ensured during the towards the fish gullet, and from the fish gullet, after the cutting has taken place, no damage will be done on the fish.

In another embodiment, the mandrel is rotating during the process of penetrating the cutting means towards the gullet of the fish and/or while advancing the cutting means away from the gullet of the fish after the gullet has been cut.

In one embodiment, the gutting apparatus further comprises a depth detection means adapted to detect the depth of the fish gullet cutting device within the fish, where the detected depth is utilized to control the rotary driven mandrel including turning the rotary driven mandrel on and off. It is thus ensured that the rotary driven mandrel is turned on/off at the correct position within the fish, namely after the cutting means has reached the gullet of the fish. The depth detection means may in one embodiment comprise a pressure sensor the senses resistance when the rotary driven mandrel reaches or hits the gullet of the fish, but this resistance may easily be detected by the depth detection means, where the signal from the pressure sensor triggers the activation/deactivation of the rotary driven mandrel.

The depth of the fish gullet cutting device within the fish may also based on a pre-set value, but the distance from the mouth to the gullet is, for the same type of fish, similar and does not vary much if the fishes varies somewhat in their sizes or weights.

The cross sectional dimension of the rotary driven mandrel is in one embodiment at least the same as the cross sectional dimension of the gullet.

In one embodiment, the cross sectional dimension of the guiding portion is larger than the cross sectional dimension of the gullet. Thus, the guiding portion may, subsequent to cutting the gullet, hold the interior of the fish, e.g. prevent it from falling down in case the fish is being held by the head up and tail down.

In one embodiment, the rotary driven mandrel is hollow on the inside, and where an elongated rod is positioned within the rotary driven mandrel having a portion extending out there from defining the guiding portion. The outer diameter of the elongated rod may be substantially the same as the inner diameter of the rotary driven mandrel, where the portion extending out from the mandrel may be smoothly shaped, e.g. be hemispherical shaped or conical shaped. Also, the elongated rod may be stationary within the elongated rod in relation to the rotary driven mandrel, i.e. when the rotary driven mandrel is turned on, the elongated rod does not rotate with it, or the elongated rod may be mounted to the rotary driven mandrel such that the elongated rod rotates with the rotary driven mandrel.

In one embodiment, the gutting apparatus further comprises a gripping unit adapted to engage the interior of the fish via the open belly and grip the gullet of the fish, where subsequent to cutting the gullet of the fish the gripping unit removes the interior of the fish. Thus, the interior of the fish may be removed as a single piece and thus the value of the fish may be enhanced because each individual organ part may be utilized for nutrition, but today the interior of the fish is often thrown away, or utilized for less productive food products such as animal feed.

The gripping unit may be connected to a conveyor system, e.g. an overhead transport conveyor that subsequently conveys the interior of the fish away.

Also, the above mentioned fish carriers may be connected to another overhead transport conveyor, where the two overhead transport conveyors move in a synchronized way while the above mentioned processing steps take place.

In a second aspect of the invention a method is provided of gutting fish using a gutting apparatus which comprises:
- a fish gullet cutting device comprising:
   o a cutting means, and
   o a guiding portion positioned anterior to the cutting means,
   wherein the method comprises:
- advancing the fish gullet cutting means into the fish via the mouth such that the guiding portion moves down the gullet of the fish and guides the cutting means towards the gullet of the fish, and
- cutting the gullet of the fish by the cutting means

In a third aspect of the invention a system is provided for gutting fish, the system comprising:
- an conveyor system,
- a gutting apparatus, and
- a plurality of support structures connected to the conveyor system for supporting the fish during the gutting,
wherein the gutting apparatus comprises:
- a plurality of fish gullet cutting devices, where each of the fish gullet cutting devices comprise:
   o a cutting means, and
   o a guiding portion positioned anterior to the cutting means,
wherein of each of the fish gullet cutting devices is adapted to, while the fishes are being conveyed by the conveyor means, enter the fish via the mouth such that the guiding portion moves into the gullet of the fish and guides the cutting means towards the gullet of the fish, where subsequently the cutting means cuts the gullet of the fish.

Thus, a simple and fully automatized system is provided for gutting fish. As already addressed, due to how simple the gutting apparatus is the cleaning of the system is greatly enhanced and more importantly the throughput may be enhanced because of the "short cut" in entering the fish and the interior of the fish may be removed as a whole out of the fish, which enhances the value of the fish. Also, the interior of the fish may be removed without damaging them, or mixing them with other ingredients such as water.

In one embodiment, the conveyor system comprises an overhead transport conveyor and where the plurality of support structures are connected to the overhead transport conveyor and are transported along a closed loop conveying path. The plurality of support structures may in one embodiment be connected such that the fish has head up and tail down.

The fishes may accordingly be e.g. in a horizontal position while the gutting is taking place, or be hanging vertically or incline where the gravity may, at least up to some extent, contribute in removing the interiour out of the fish.

In one embodiment, the system further comprises means for cutting the belly of the fishes open prior to or after cutting the gullet of the fish by the cutting means.

In one embodiment, the system further comprises a plurality of gripping units adapted to engage the interior of the fishes via the open belly and grip the gullet of the fishes while the fishes are being conveyed by the conveyor system. The gripping units may in one embodiment engage the interior of the fish via the open belly and grip the gullets of the fishes before the cutting is performed by the cutting means.

Accordingly, it is possible the remove the interior of the fish as a whole without damaging each individual organ of the fish, i.e. the liver, heart and stomach. Thus, by the value of the fish is enhances because this interior may be sold for human nutrition, or for producing e.g. fish oil.

In one embodiment, the system further comprises a further overhead transport conveyor and where the plurality of gripping units are connected to the further overhead transport conveyor, where subsequent to gripping and cutting the gullet of the fishes while the fishes are being conveyed by the conveyor system the interior of the fishes is removed from the fishes and transported by the further overhead transport conveyor via the plurality of gripping units.

Accordingly, a simple and effective solution is provided for removing the interior of the fish and transport it to another location in a fully automatized way.

In one embodiment, the system further comprises opening units adapted to open the mouth of the fishes open prior to advancing the fish gullet cutting means into the fish via the mouth.

This may be an advantage so as to ensure that the fish gullet cutting devices enter the fish smoothly.

In one embodiment, the overhead transport conveyor and the further overhead transport conveyor are placed adjacent to each other move in a synchronized way such that the plurality of gripping units grip the gullet of the fishes before the cutting the gullet of the fishes takes places, or subsequent the cutting the gullet of the fishes takes places but prior to the interior falls out of the belly of the fishes. As an example, the transport and the further overhead transport conveyors may move in a circular motion.

In one embodiment, when the plurality of fish gullet cutting devices are moved out the fishes, and before they enter subsequent fished via the mouth, the plurality of fish gullet cutting devices undergo a cleaning station where they are cleaned. As an example, such a cleaning station may comprise one or more nozzles that inject water e.g. under high pressure on the cutting means and the guiding portion.

As already addressed, the cutting means may in one embodiment comprises the rotary driven mandrel, where the detailed functioning of the rotary driven mandrel may be similar as already discussed.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figures 1 and 2 depict an embodiment of a gutting apparatus according to the present invention for gutting a fish,
figures 3 and 4 show where a fish to be gutted is positioned in a horizontal position and propped in a support structure,
figure 5a-d shows one embodiment of gutting fish, where the in this embodiment it is assumed that the the belly of the fish has been cut open and that the fish is hanging with head up and tail down,
figure 6a-d shows in more details the steps taking place after the gutting apparatus has entered the interior of the fish and reached the gullet, and
figure 7 shows one embodiment of a system for gutting fish, where the system comprises an advancing mechanism that is connected to, or associated with the gutting apparatus according to the present invention.

### DESCRIPTION OF EMBODIMENTS

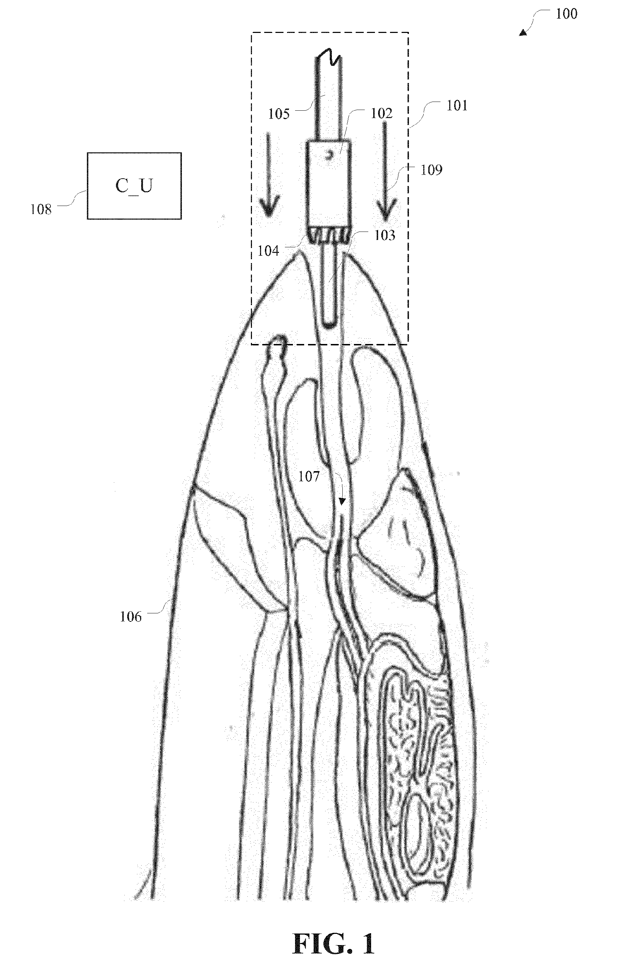

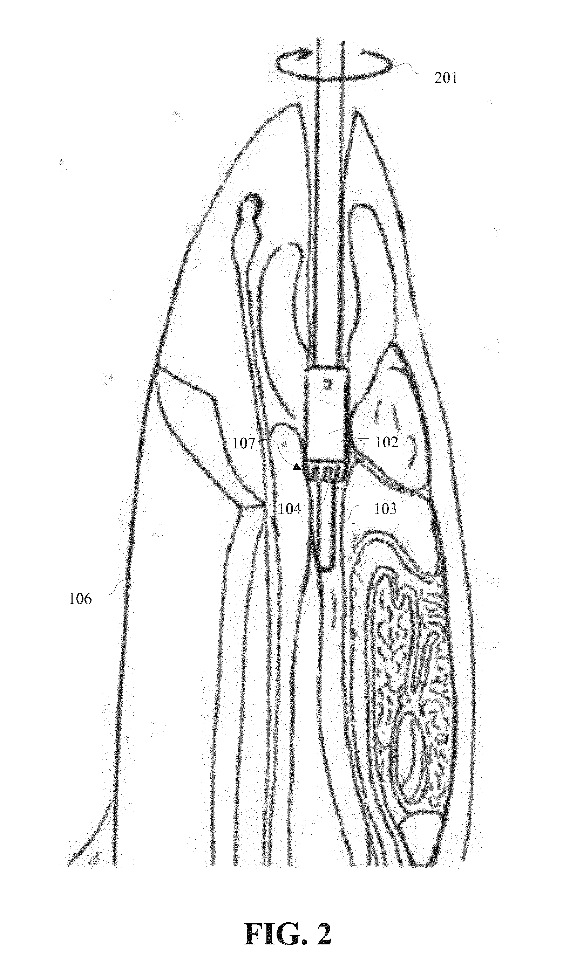

Figures 1 and 2 depict an embodiment of a gutting apparatus 100 according to the present invention for gutting a fish 106, comprising a fish gullet cutting device 101 that comprises a cutting means 102 and a guiding portion 103 positioned anterior to the cutting means 102.

The fish gullet cutting device 101 may be connected to an advancing means (not shown here), where the advancing means is adapted to advance the fish gullet cutting means 101 into the fish as indicated by the arrows 109 via the mouth such that the guiding portion 103 moves into the gullet of the fish and guides the cutting means towards the gullet 106 of the fish.

As shown here, the cutting means 101 comprises a rotary driven mandrel comprising a free end having cut out portions 104, where the cross sectional dimension of the rotary driven mandrel may be at least the same as the cross sectional dimension of the gullet 107.

The rotary driven mandrel may be controlled by a control unit (C_U) 108, where the controlling may include turning the rotary driven mandrel temporarily on, as indicated by the arrow 201 when the rotary driven mandrel has reached the gullet 107 of the fish, as shown in figure 2. By doing so, the interior of the fish is more or less loosened from the rest of the fish.

In another embodiment, the controlling may comprise running the rotary driven mandrel at all times, i.e. while the rotary driven mandrel is penetrating into the fish 106 and is removed from the fish.

The depth of the cutting means 101 into the fish may be pre-set, e.g. via sliding guides, as will be discussed in more details later, or a depth detection means such as a pressue sensor may be utilized to determine e.g. when to turn the rotary driven mandrel on and off, but this may e.g. be based on detecting the resistance when the cutting means 101 has reached the gullet 107 or gullet area.

In one embodiment, the rotary driven mandrel comprises an elongated and hollow member or cylinder 105, where an elongated rod is positioned within the elongated and hollow member or cylinder 105, having a portion extending out there from defining the guiding portion 103. This elongated rod may be attached to the rotary driven mandrel/ member or cylinder 105 such that it rotates with the rotary driven mandrel, or it may be stationary in relation to the rotary driven mandrel.

As will be discussed in more details later, the gutting apparatus 100 further comprises a gripping unit adapted to engage the interior of the fish via the open belly and grip the gullet of the fish, where subsequent to cutting the gullet of the fish the gripping unit removes the interior of the fish.

It should be noted that the positioning of the fish should not be construed as being limited to the head up and tail down position as shown here, but as will be discussed in more details later other positionings are just as well possible, such as when the fish is horizontal position, or with tail up and head down, or in any inclined position.

The apparatus preferably also comprises a support structure (not shown in figures 1 and 2) for supporting the fish during the gutting.

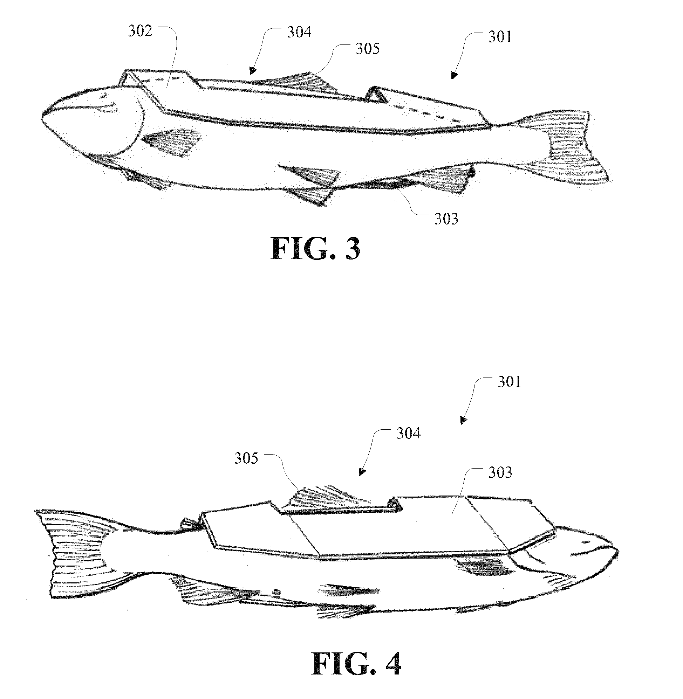

Figures 3 and 4 show where a fish to be gutted is positioned in a horizontal position and propped in a support structure 301 comprising two opposite sites 302, 303 and a bottom portion 304 having an opening for the dorsal fin 305 of the fish.

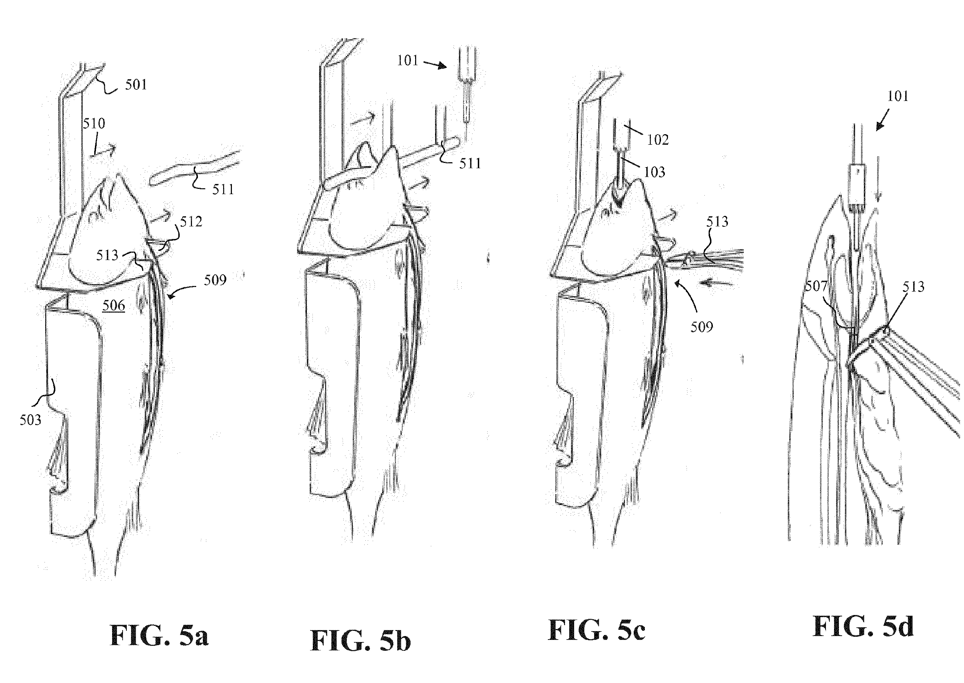

Figure 5a-d shows one embodiment of gutting fish 506, where the in this embodiment it is assumed that the belly of the fish has been cut open 509 and that the fish 506 is hanging with head up and tail down.

The belly may be cut with any type of cutting means such as, but not limited to, a rotating cutting blade, a knife, or any means. This may be a manual process or it may be fully automatized process.

The support structure shown here comprise a fish carrier 501 having two outwardly produding plates or fingers 512, 513 that hold the fish between the gill cover and the gill of the fish. The support structure also comprises a back-support structure 503 such as the one shown in figures 3 and 4.

The fish carrier 501 may be slidable mounted to a track of an overhead transport conveyor (not shown), e.g. via one or more trolleys (not shown) that may comprises guide wheels that run along the track in a direction as indicated by the arrow 510. In one embodiment, chain clamps may be provided that clamp the trolleys onto a drive chain of the overhead transport-conveyor system that is connected to a driving system. An example of such an overhead transport-conveyor system may be found in WO2011/074969 e.g. in figures 21-22 and on p.59 1. 26-p.62 1. 14, hereby incorporated by reference.

In the embodiment shown here, a mouth opening means 511 is provided for opening the mouth of the fish open prior to advancing the fish gullet cutting means into the fish. This mouth opening means 511, which as shown here may be an elongated rod, may be considered as an optional feature.

Figure 5b shows where the fish 506 is being conveyed past the mouth opening means 511 such that it interacts with the elongated rod and opens the mouth. The gutting apparatus 101, e.g. the one discussed in relation to figure 1, is also shown dowstream to the conveying direction.

Figure 5c shows where the gutting apparatus 101 is positioned above the mouth of the fish and where a gripping unit 513 engages the interior of the fish via the open belly 509 before the gullet 507 of the fish is cut.

Figure 5d shows where the gripping unit 513, that may comprise two oppsingly arranged claws, grips the gullet 507 of the fish with the claws and where simultaneously the fish gullet cutting means 101 enters the fish via the mouth. An advancing mechanism (not shown) may be provided for advancing the fish gullet cutting means into the fish via the mouth as indicated by the arrow such that the guiding portion 103 moves into the gullet of the fish and guides the cutting means 102 towards the gullet of the fish.

The advancing means may in one embodiment comprise sliding guides to which the fish gullet cutting device 101 is slidable attached to and where the movement of the fish gullet cutting device 101 is one dimensional, i.e. in this case, a simple up and down movement, or as will be disucussed later the the advancing means may comprise sliding tracks.

The movement of the fish gullet cutting device 101 may be provided via any type of motor or driving unit (not shown) that is operatively connected to a control unit (not shown).

In order to determine accurately when to advance the fish gullet cutting device 101 down and into the fish 506 via the mouth may be based on tracking data of the fish, where a control unti may utililiz tracking related data, e.g. by monioring the exact position of the fish carier 501 to determine the exact position of the fish. Other means to accurately determine the exact position of the fish carrier 501 may be used, e.g. cameras, or any type of mechanical sensors may be utilized to determine when the fish carrier 501 is approaching the fish gullet cutting device 101.

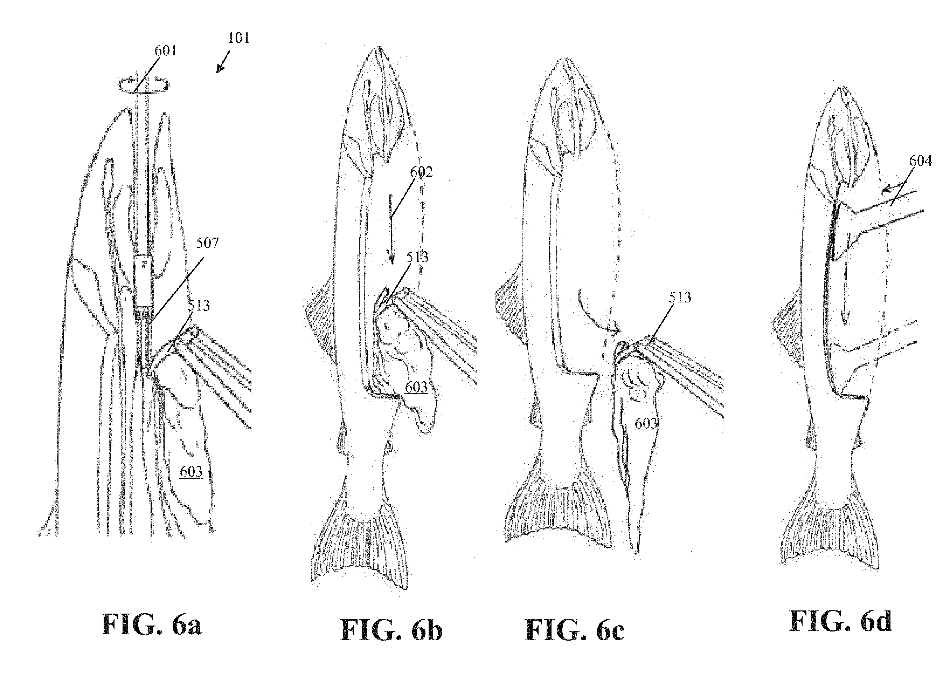

Figure 6 shows in more details the steps taking place after the fish gullet cutting means 101 of the cutting apparatus has entered the interior 603 of the fish and reached the gullet.

As already addressed, the gullet acts as the main attachment between the interior (e.g. stomach, liver, heart) of the fish and the remaining part of the fish. As soon as the gullet is cut only some minor attachments are present between the interior of the fish and the remaning part of the fish.

Figure 6a shows where the fish gullet cutting means 101 is turned on temperarily, as indicated by the arrow 601, upon reach the gullet 507 or gullet area of the fish.

As discussed in relation to figure 1 and 2, the fish gullet cutting means 101 comprises a rotary driven mandrel comprising a free end having cut out portions, where the cross sectional dimension of the rotary driven mandrel may be at least the same as the cross sectional dimension of the gullet. By cutting gullet 507 of the fish the interior 601 of the fish, i.e. the fish heart, liver, stomach etc., is more or less loosened from the remaining part of the fish.

Figure 6a shows also where the clamping unit 513 has clamped the gullet prior to cutting the gullet so as to ensure that the gullet will not fall out of the fish.

Figure 6b shows where the clamping unit 513, that may be operated by any type of a control unit that operate a e.g. a robotic arm, or any type of mechanical setup well know to a person skilled in the art, moves downwardly as indicated by the arrow 602, and out of the fish as shown in figure 6c. The fact that the gullet of the fish has been cut means that the interior of the fish is more or less loosened, only some minor forces are needed to loosen it fully from the remaining part of the fish.

The clamping unit 513 may in one embodiment be slidable connected to another track of another overhead transport conveyor (not shown) similar to the one discussed previously and e.g. described in WO2011/074969 in figures 21-22 and on p.59 1. 26-p.62 1. 14, hereby incorporated by reference, and may subsequently be conveyed away for the remaining part of the fish to another location.

The clamping unit 513 may subsequently move away from the fish with the interior of the fish and move it to another location, where the interior may be preserved as whole. As an example, the clamping unit 513 may be connected to any type of transport system, e.g. an overhead transport conveyor system as discussed previously, that conveys the interior away.

The clamping unit 513 may also be operable to transfer the interior of the fish 603 to another clamping unit or clamping means that is connected to such an overhead transport conveyor, where the interior 603 is subsequently conveyed away from the fish.

Figure 6d shown a final step where a scraper 604 that subsequently scrapes the blood line of the fish by moving the from up to down, where the scraper may comprise a V or U-shaped edge, preferably a sharp edge, to capture the blood line of the fish.

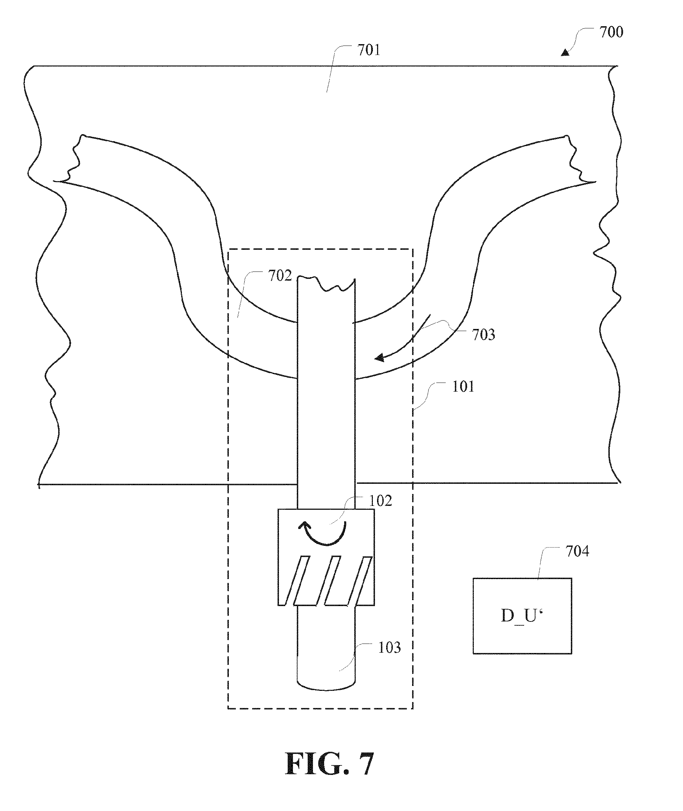

Figure 7 shows one embodiment of a system 700 for gutting fish, where the system 700 comprises an advancing means that is connected to, or associated with the gutting apparatus according to the present invention. The advancing means is adapted to advance the fish gullet cutting means into or out from the fish via the mouth and comprises a wave-like track 702 to which the gutting apparatus according to the present invention is slidable mounted to. The track 702 may be an integral part of an overhead transport conveyor 701, which may be a horizontal arranged carousel conveyor.

A driving unit is (D_U') 704 is provided for driving the gutting apparatus along the wave-like track 702 of the overhead transport conveyor 701 the direction as indicated by the arrow 703. Plurality of gutting apparatuses may be provided along the track 702 of the first overhead transport conveyor system and that may e.g. be connected together via a driving chain that is driven by a driving wheel (not shown).

The movement of the fish gullet cutting means 101 of the gutting apparatus may in one embodiment be synchronized with a movement of the fish carried by a fish carrier, e.g. similar as the one discussed in relation to figures 5 and 6, such that the fish gullet cutting means 101 enters the mouth as shown in figures 5 and 6 at the correct time. Preferably, the fish gullet cutting means 101 and the fish are preferably being conveyed in the same direction such that the relative side-ways displacement between them is around zero.

The system 700 comprises in one embodiment a further conveyor that may act as a take-away conveyor for the interior of the fish. This further conveyor may be positioned adj acent to the overhead transport conveyor 701 and have a plurality of clamping unit 513 discussed in relation to figures 5-7 connected to it.

The movement between the overhead transport conveyor 701 and the further conveyor (not shown) is preferably synchronized such that the steps shown in e.g. figures 6a-6c are fully automatized and synchronized, where subsequent to the removal of the interior shown in figure 6c the interior 603 is conveyed away with the further conveyor. The further conveyor may in one embodiment be identical to the overhead transport conveyor similar to the one discussed previously and e.g. described in WO2011/074969 in figures 21-22 and on p.59 1. 26-p.621. 1. 14, hereby incorporated by reference, and may subsequently be conveyed away for the remaining part of the fish to another location.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A gutting apparatus (100) for gutting a fish (106), comprising:
• a fish gullet cutting device (101) comprising:
o a cutting means (102), and
o a guiding portion (103) positioned anterior to the cutting means,
wherein the fish gullet cutting device is adapted to enter the fish via the mouth such that the guiding portion moves into the gullet of the fish and guides the cutting means towards the gullet of the fish, where subsequently the cutting means cuts the gullet of the fish.

2. The gutting apparatus according to claim 1, further comprising a support structure (301) for supporting the fish during the gutting.

3. The gutting appparatus according to claim 2, wherein the support structure comprises a fish carrier (501) adapted to be connected to an overhead transport conveyor system arranged such that the fish has head up and tail down.

4. The gutting apparatus according to any of the preceding claims, further comprising means for cutting the belly of the fish open prior to or after cutting the gullet of the fish by the cutting means.

5. The gutting apparatus according to any of the preceding claims, further comprising a mouth opening means for opening the mouth of the fish prior to advancing the fish gullet cutting means into the fish.

6. The gutting apparatus according to any of the preceding claims, wherein the cutting means comprises a rotary driven mandrel.

7. The gutting apparatus according to claim 6, wherein the rotary driven mandrel comprises a free end having cut out portions.

8. The gutting apparatus according to claim 6 or 7, wherein the rotary driven mandrel comprises outwardly protruding cutting means.

9. The gutting apparatus according to any of the preceding claims, wherein the rotary driven mandrel is controlled by a control unit where the controlling includes turning the rotary driven mandrel temporarily on when the rotary driven mandrel has reached the gullet of the fish.

10. The gutting apparatus according to claim 9, further comprising a depth detection means adapted to detect the depth of the fish gullet cutting device within the fish, where the detected depth is utilized to control the rotary driven mandrel including turning the rotary driven mandrel on and off.

11. The gutting apparatus according to any of the preceding claims, wherein the cross sectional dimension of the rotary driven mandrel is at least the same as the cross sectional dimension of the gullet.

12. The gutting apparatus according to any of the preceding claims, wherein the rotary driven mandrel is hollow on the inside, and where an elongated rod is positioned within the rotary driven mandrel having a portion extending out there from defining the guiding portion.

13. The gutting apparatus according to any of the preceding claims, further comprising a gripping unit adapted to engage the interior of the fish via the open belly and grip the gullet of the fish, where subsequent to cutting the gullet of the fish the gripping unit removes the interior of the fish.

14. A method of gutting fish using a gutting apparatus which comprises:
• a fish gullet cutting device connected to an advancing mechanism, where the fish gullet cutting comprises:
o a cutting means, and
o a guiding portion positioned anterior to the cutting means,
wherein the method comprises:
• advancing the fish gullet cutting means via the advancing mechanism into the fish via the mouth such that the guiding portion moves down the gullet of the fish and guides the cutting means towards the gullet of the fish, and
• cutting the gullet of the fish by the cutting means.
